# EUROPÄISCHE PATENTSCHRIFT

(11) **EP 1 910 794 B1**
(45) Veröffentlichungstag und Bekanntmachung des Hinweises auf die Patenterteilung: **30.03.2016**
(21) Anmeldenummer: 06777934.8
(22) Anmeldetag: 24.07.2006
(51) Int. Cl.: G01M 3/22, G01N 5/02, G01N 15/08

(54) **VERFAHREN ZUR ÜBERPRÜFUNG DER PERMEABILITÄTSRATE EINES GESCHLOSSENEN BEHÄLTERS**
METHOD FOR CHECKING THE PERMEABILITY RATE OF A SEALED CONTAINER
PROCEDE POUR CONTROLER LE TAUX DE PERMEABILITE D'UN RECIPIENT FERME

(30) Priorität: 27.07.2005 DE 102005035715
(43) Veröffentlichungstag der Anmeldung: 16.04.2008
(73) Patentinhaber: Boehringer Ingelheim International GmbH, 55216 Ingelheim am Rhein (DE); Boehringer Ingelheim Pharma GmbH & Co. KG, 55216 Ingelheim am Rhein (DE)
(72) Erfinder: BOTHE, Daniela, 55578 Wallertheim (DE); HOELZ, Hubert, 55413 Oberheimbach (DE); KREHER, Christoph, 55218 Ingelheim am Rhein (DE); METZGER, Burkhard, 55218 Ingelheim am Rhein (DE); SCHEFFLER, Christian, 55218 Ingelheim am Rhein (DE)
(74) Vertreter: Simon, Elke Anna Maria
(86) Internationale Anmeldenummer: PCT/EP2006/064582
(87) Internationale Veröffentlichungsnummer: WO 2007/012629

(56) Entgegenhaltungen:
- EP-A- 0 351 137
- EP-A- 1 202 042
- EP-A- 1 522 838
- WO-A-95/00827
- WO-A-99/46572
- DE-A1- 10 243 255
- GB-A- 2 376 748
- US-A- 5 553 483
- US-A1- 2004 003 653
- US-B1- 6 640 615

## Beschreibung

Die Erfindung bezieht sich auf ein Verfahren zur Überprüfung der Permeabilitätsrate eines geschlossenen Behälters bezüglich eines Mediums, insbesondere eines Folienbehälters, zur Aufnahme einer pharmazeutischen Wirkstoffformulierung.

Die Behälter dienen unter anderem dazu, pharmazeutische Wirkstoffformulierungen vor Umwelteinflüssen von außen zu schützen, die unter Umständen die pharmazeutische Qualität der Wirkstoffformulierung beeinflussen können, wobei insbesondere in die Behälter eindringende Feuchtigkeit die Wirkstoffformulierung negativ beeinträchtigen kann. Im Weiteren ist es erforderlich, bei den Behältern die Permeabilität flüchtiger Stoffe der Wirkstoffformulierungen im Laufe deren Lagerung zu verhindert, um dadurch einer Änderung der pharmazeutischen Wirkstoffformulierung entgegen zu wirken.

Bei den Behältern handelt es sich insbesondere um Primärverpackungen für pharmazeutische Wirkstoffformulierungen, wie Glas-, Metall-, Kunststoffbehälter und dergleichen. Zum Verpacken von Tabletten, Kapseln, Pulver und Ähnlichem werden als Folienbehälter ausgestaltete Behälter, so genannte Blister, verwendet, die in der Regel aus einer Deckfolie. und einer Trägerfolie bestehen, wobei in der Trägerfolie ein oder mehrere Näpfe zur Aufnahme der Wirkstoffformulierung, Tablette oder Kapsel ausgebildet sind. Die Deckfolie und die Trägerfolie können aus einer oder mehreren Schichten verschiedener oder gleicher Materialien aufgebaut sein. Die Deckfolie wird mit der Trägerfolie z. B. durch Kleben, Schweißen oder Versiegeln abgedichtet verbunden. Mechanisch unversehrte Blister schützen eine darin eingebettete Wirkstoffformulierung vor dem Eintritt oder Austritt von Stoffen. So kann in Abhängigkeit vom Material beispielsweise Feuchtigkeit über die obere Seite des Blisters, die Unterseite oder durch die Kanten in das Innere gelangen.

Flüssige Wirkstoffformulierungen können sowohl in die oben genannten Behälter als auch in Kartuschen verpackt werden, die beispielsweise als Wirkstoffreservoir für pharmazeutische Flüssigkeiten in Inhalatoren verwendet werden. Solche Kartuschen sind beispielsweise aus der EP 0 532 873, WO 96/06011, WO 97/39831, WO 00/23037, WO 00/27543, WO 00/049988, WO 01/76849, WO 99/43571 oder der WO 98/46522 bekannt. Eine Kartusche kann beispielsweise in einen in der WO 97/12687 oder der WO 91/14468 beschriebenen Inhalator eingesetzt werden, mit dem die Applikation von flüssigen Inhalationsformulierungen mittels bestimmter Treibgas freier Formulierungen auf wässriger oder alkoholischer Basis möglich ist..

Um die Dichtigkeit der Behälter bestimmen zu können, sei es gegenüber von außen eindringenden Flüssigkeiten oder Gasen, z.B. Feuchtigkeit in Form von Wasser oder Wasserdampf, oder sei es von innen austretenden Flüssigkeiten oder Gasen, sind aus dem Stand der Technik verschiedene Verfahren bekannt. Dies gilt insbesondere für Blister. Beispielsweise wird ein mit einem Trockenmittel gefüllter Behälter bestimmten Umweltbedingungen (z.B. 40°C, 75% Raumfeuchte) ausgesetzt und anschließend wird über eine Gewichtszunahme des Behälters über die Zeit auf dessen Dichtigkeit geschlossen. Ein solches Verfahren benötigt häufig Monate, um niedrige Leckräten nachzuweisen. In einem weiteren Verfahren wird ein Behälter, z.B. unter Helium-Atmosphäre, versiegelt, wobei Helium im Behälter eingeschlossen wird. Der Behälter wird daraufhin auf austretendes Helium untersucht. Dabei kann der Behälter in eine Messkammer gelegt werden, wobei aus dem Behälter austretendes Gas mit geeigneten Meßsystemen der Messkammer nachgewiesen wird. Bei diesen Verfahren ist es erforderlich, im Behälter eine gleich bleibende hohe Helium-Konzentration einzustellen, um ein reproduzierbares Ergebnis zu erhalten, was in einem Produktionsprozess nicht immer einfach zu realisieren ist. In einem weiteren Verfahren wird der unter normalen Bedingungen gefertigte Behälter in eine druckstabile Probenkammer eingeschlossen, die mit Gas gefüllt wird. Als Gas wird üblicherweise Kohlendioxyd, Helium oder Krypton verwendet. Nach einer bestimmten Zeit wird der zu untersuchende Behälter aus der Probenkammer entfernt und auf austretendes Gas untersucht. Alternativ kann der Behälter in eine Messkammer gelegt werden, wobei anschließend aus dem Behälter austretendes Gas mit entsprechenden Messsystemen in der Messkammer nachgewiesen wird. Die Anwendbarkeit dieser Verfahren wird durch die Nachweisgrenze des Gases in der Messkammer begrenzt, da im Fall eines an und für sich dichten Behälters in beiden Verfahren nur verhältnismäßig wenig Gas (ppm-Bereich) in den Behälter eindringen und dementsprechend auch nur sehr wenig Gas aus dem Behälter in die Messkammer gelangen kann.

Aus der WO 2004/034 009 ist ein Verfahren zur Überprüfung der Dichtigkeit von geschlossenen Behältern bekannt, die in einer dafür vorgesehenen Kammer in ihrem Innern eine pharmazeutische Wirkstoffformulierung beinhalten. Ein geschlossener Folienbehälter wird mit einem ersten Gas beaufschlagt, das sich soweit von einem zweiten, in den Behälter eingeschlossenen Gas unterscheidet, dass die Zunahme des ersten Gases im Inneren des Behälters analysiert werden kann. Nach dem Öffnen des Behälters und der Entnahme eines Teils des Gases, das sich im Inneren der Kammer für die Wirkstoffformulierung befindet, wird eine qualitative und/oder quantitative Analyse des entnommenen Gases durchgeführt.

Weitere Verfahren zur Überprüfung der Dichtigkeit werden beispielsweise in den Druckschriften GB-A-2376748, EP-A-1202042, WO95/00827, EP-A-1522833, WO 99/46572 A, US-B1-6 640 615, US-A-5 553 483 und US 2004/003653 A1 offenbart, Weiterhin betrifft die EP-A-0 351 137 einen Behälter enthaltend ein poröses Material.

Der Erfindung liegt die Aufgabe zugrunde, ein verbessertes Verfahren der eingangs genannten Art zu schaffen, das produktionsbegleitend und schnell Daten zur Dichtigkeit des Behälters liefert.

Erfindungsgemäß wird die Aufgabe dadurch gelöst, dass der Behälter mit dem Medium gefüllt, mit einem Gas beaufschlagt und anschließend eine Zunahme der Menge des Mediums in dem Gas analysiert wird. Dementsprechend betrifft die vorliegende Erfindung ein Verfahren zur Überprüfung der Flüssigkeits-Permeabilitätsrate eines geschlossenen Behälters (3), der zur Aufnahme einer pharmazeutischen Wirkstoffformulierung geeignet ist, wobei der Behälter (3) in eine geschlossene Probenkammer (1) gegeben wird, durch die ein Gas strömt, wobei der Behälter (3) mit dem Gas beaufschlagt wird, und wobei anschließend eine Zunahme der Menge der Flüssigkeit in dem Gas analysiert wird, dadurch gekennzeichnet, dass die Flüssigkeit von einem porösen Festkörper (10) aufgenommen wird, der in den Behälter (3) eingelegt wird und der Festkörper (10) an die Größe und Form des Behälters (3) derart angepasst ist, dass der Behälter (3) bei der Beaufschlagung durch Gas vor einer Deformation, sowie vor einer Beschädigung geschützt wird.

Das Verfahren beruht auf der Überlegung, dass bei einem gegebenen Partialdruckgefälle die Richtung der Permeabilität bzw. Permeation bei den zu untersuchenden Proben keine Rolle spielt. D.h., es wird vorausgesetzt, dass die Permeabilität von außen nach innen und von innen nach außen gleich abläuft. Durch geeignete Analysemethoden lässt sich das Medium in geringsten Mengen im ppb-Bereich innerhalb des Gases bereits nach einer verhältnismäßig kurzen Zeit bestimmen, wodurch ein schneller Verfahrensablauf gewährleistet ist

Als Medium wird eine Flüssigkeit verwendet. Da innerhalb des Behälters eine relative Feuchte von 100% vorliegt, erfolgt eine Permeation der Flüssigkeit von innen nach außen und das den Behälter beaufschlagende Gas nimmt den austretenden Dampf auf, dessen Menge sich durch die nachfolgende Analyse des Gases feststellen lässt. Selbstverständlich ist das Medium in dem Gas auch dann analysierbar, wenn der Behälter ein Leck aufweist, durch das eine größere Menge Flüssigkeit austritt. Als Medium kann auch ein gasförmiges Medium, bevorzugt Wasserdampf, verwendet werden.

Um den Behälter vor einer Deformation sowie Beschädigung durch die Beaufschlagung seitens des Gases zu schützen, wird die Flüssigkeit von einem porösen Festkörper aufgenommen, der an die Größe und Form des Behälterinneren angepasst ist Zweckmäßigerweise wird der Festkörper aus Ton gefertigt. Bei Ton handelt es sich um ein relativ einfach zu verarbeitendes Material, das eine verhältnismäßig große Menge an Flüssigkeit aufhehmen kann. Der Festkörper aus Ton wird vor seinem Gebrauch gebrannt, insbesondere im Sprühbrandverfahren bei ca. 1000° C.

Vorzugsweise wird als Flüssigkeit Wasser verwendet. Wasser ist gefahrlos zu handhaben und in einer Vielzahl von Gasen, insbesondere von Edelgasen, selbst in kleinsten Mengen nachweisbar. Das eingesetzte Gas soll selbstverständlich so beschaffen sein, dass eine Zunahme von Wasser in dem Gas quantitativ bestimmt werden kann.

Zweckmäßigerweise wird der gebrannte Ton mit Wasser getränkt, wobei der derart präparierte Tonkörper das Innere des Behälters vollständig ausfüllt. Handelt es sich bei dem Behälter beispielsweise um einen Blister mit mehreren Näpfen, wird in jeden Napf der Tonkörper eingelegt und die Näpfe anschließend dicht verschlossen. Anschließend wird der Blister mit dem Gas beaufschlagt. Ist der Behälter undicht oder das Material durchlässig für Wasserdampf, entweicht der Wasserdampf aus dem Inneren des Behälters in das Gas Nach einer bestimmten Zeit stellt sich ein stationärer Zustand bezüglich der Permeabilitätsrate des Wasserdampfs ein. Diese "steady state" Permeabilitätsrate führt dann zu einer Zunahme des Wasserdampfs in dem Gas, die bestimmt werden kann. Aus diesem Wert lässt sich unter der Annahme, dass sämtliche Näpfe, also alle Einzelkavitäten, gleich gut verarbeitet wurden, die Wasserdampfabgabe für einen einzelnen Napf errechnen.

Bevorzugt wird als Gas Stickstoff verwendet. Zweckmäßigerweise wird das Gas vor der Beaufschlagung des Mediums getrocknet oder dessen Wassergehalt bestimmt. Damit befindet sich der Behälter idealerweise in einer Außenumgebung mit nahezu 0%-Feuchte oder einer bekannten Feuchte und das Gas nimmt aus dem Behälter austretende Feuchte mit, wobei eine Zunahme von Feuchte verhältnismäßig einfach festgestellt werden kann.

Zur Druckbeaufschlagung des Behälters wird der Behälter in eine geschlossene Probenkammer gegeben, durch die das Gas strömt Um Einflüsse der Umgebungstemperatur auf den Austritt des Mediums weitestgehend zu reduzieren, wird in Ausgestaltung die Probenkammer klimatisiert. Aufgrund der Klimatisierung der Probenkammer mit einem Heiß-/Kühl-medium mit konstanter Temperatur werden Temperatur bedingte Schwankungen im Verlauf der Messwerte verhindert. Hierbei wird eine Temperatur eingestellt, die beispielsweise in bestimmten Klimazonen herrscht. Bevorzugt wird daher bei einer Temperatur zwischen 0°C und 50°C, insbesondere zwischen 10°C und 30°C, vorzugsweise bei Raumtemperatur, gearbeitet.

Damit die Permeabilitätsrate des Mediums nach möglichst kurzer Zeit einen stationären Zustand einnimmt, werden nach einer Weiterbildung die Dichtungen der Probenkammer vorgetrocknet.

Um möglichst genaue und reproduzierbare Analyse- bzw. Messergebnisse zu erzielen, durchströmt vorteilhafterweise das Gas die Probenkammer mit einem konstanten Massendurchfluss und einem konstanten Druck.

Um die Zeit bis zum Erreichen des die Permeabilität des Wasserdampfes widerspiegelnden stationären Zustandes zu verkürzen, wird vorzugsweise der Behälter vor dem Einsetzen in die Probenkammer vorgetrocknet. Diese Vortrocknung reduziert, insbesondere bei Blistern, hauptsächlich die Wassermengen, die in außen liegenden Schichten gespeichert sind. Durch das Vortrocknen des Behälters kann die Gesamtmesszeit auf beispielsweise 180 Stunden reduziert werden, wobei die Messzeit bei einem nicht vorgetrockneten Behälter beispielsweise 250 Stunden beträgt.

Damit bei einem Einsetzen der Behälter in die Probenkammer möglichst wenig Feuchtigkeit in dieselben gelangt und Umgebungseinflüsse weitestgehend reduziert werden, wird zweckmäßigerweise die Probenkammer in eine geschlossene Kammer gegeben. Die geschlossene Kammer umfasst einen Handschuheingriff, um ein Hantieren im Innern derselben sicherzustellen.

Nach einer weiteren Ausgestaltung wird zur Analyse des Gases eine Auswerteeinheit verwendet, die Schwingquarze umfasst. Solche aus dem Stand der Technik dem Fachmann bekannte Schwingquarze dienen zur Spurenfeuchtebestimmung in Gasen im ppm/ppb-Bereich und verfügen über schnellstes Ansprechverhalten, wodurch hochgenaue Messungen ermöglicht sind. Der Schwingquarz ist mit einer hygroskopischen Schicht versehen, die selektiv für Wassermoleküle ist und eine hohe Affinität besitzt dem Messgas Wassermoleküle zu entnehmen. Selbstverständlich ist der Auswerteeinheit im Weiteren eine Rechnereinheit mit mindestens einem Speichermodul und einer Anzeigeeinrichtung zugeordnet, um die mittels der Schwingquarze gewonnen Messergebnisse auszuwerten, zu speichern und zur Anzeige zu bringen.

Ein bevorzugter Behälter zur Verwendung in dem vorstehend erläuterten Verfahren ist ein Blister für Arzneimittel. Der Blister besteht aus mindestens einer Deckfolie und einer wenigstens einen Napf für die Wirkstoffformulierung aufweisenden Trägerfolie, wobei die Deckfolie und die Trägerfolie zum abgedichteten Verschließen des Napfes fest miteinander verbunden sind. Werden für die Deckfolie und die Trägerfolie gleiche Materialien verwendet,' lassen sich in Vergleichsversuchen die permeabilitätsabhängigen Eigenschaften der Materialien ermitteln, wodurch sich wichtige Erkenntnisse für die Entwicklung von Blistern ableiten lassen. Zweckmäßigerweise ist die Deckfolie mittels eines Heißsiegellackes mit der Trägerfolie verbunden. Die Bestimmung der Permeabilitätsrate der Heißsiegellackschicht führt zu der Erkenntnis, dass diese einen erheblichen Anteil an der Permeabilitätsrate des gesamten Blisters hat. Für die Optimierung eines Blisters bedeutet dies, dass eine Veränderung der Dicke des Heißsiegellackes oder von dessen Eigenschaften bezüglich der Wasserdampfpermeabilität einen größeren Effekt bedingt, als eine Veränderung der Eigenschaften der Deckfolie bzw. der Trägerfolie. Bei einem optimierten Blister wird beispielsweise eine Menge zwischen 2 und 10g/qm, vorzugsweise zwischen 4 und 7g/qm, bevorzugt 5,5g/qm Heißsiegellack aufgetragen. Hierbei beträgt die Dicke des Heißsiegellackes beispielsweise zwischen 2,5 und 8,5µm, vorzugsweise zwischen 4,5 und 6,5µm und bevorzugt 5,5µm.

In Ausgestaltung ist die Deckfolie und/oder die Trägerfolie als Metall- und/oder Kunststoff-und/oder Papierfolie ausgebildet. Diese Materialien können in mehreren Schichten vorhanden sein. Typische Metallfolien umfassen beispielsweise Aluminiumfolien und Aluminiumverbundfolien, die aus Aluminium und z.B. einem Kunststoff gefertigt sind. Als Material für die Kunststofffolien kann Polyvinylchlorid (PVC) CyCloolefin-Copolymer (COC), Polychlortrifluorethylen (PCFE), Polyethylen (PE), Polypropylen (PP), Polyethylenterephtalat (PET), Polycarbonat (PC), Polyester (UP), Polyacrylat, Polyamid (PA) oder andere Kunststoffe verwendet werden. Häufig besteht ein Blister aus einer Deckfolie aus Aluminium, die die Trägerfolie zur Aufnahme des pharmazeutischen Produktes bzw. Wirkstoffes verschließt. Diese tiefgezogene Trägerfolie kann ebenfalls eine Aluminiumfolie umfassen, um den Eintritt von Wasser in den Napf zur Aufnahme des pharmazeutischen Produktes zu verhindern. Zur Schaffung einer weiteren Diffusionsbarriere bzw. zur Erhöhung der mechanischen Stabilität des Blisters kann optional zumindest die Aluminiumfolie der Trägerfolie ein oder beidseitig mit weiteren Kunststoff- und/oder Papierfolien bedeckt sein:

Ein weiterer Behälter zur Verwendung in dem oben genannten Verfahren ist ein geschlossener zweischichtiger flaschenähnlicher Behälter mit einen steifen Außenhülle und einem nur punktuell mit der Außenhülle mechanisch verbundenen Innenbehälter, der gegenüber dem Außenbehälter in sich zusammenfallen kann. Bevorzugt ist der Behälter mittels eines Coextrusionsverfahrens hergestellt. Zweckmäßigerweise besteht der Außenbehälter aus Polypropylen und der Innenbehälter aus Polyethylen. Der äußere Behälter enthält wenigstens eine Ventilöffnung, die es ermöglicht, dass Luft zwischen dem äußeren Behälter und dem Innenbehälter einströmen kann. Der Innenbehälter ist ähnlich einer Plastiktüte und kann sich zusammenziehen, wenn aus dem geschlossenen System unter Druck eine Flüssigkeit aus dem Innenbehälter entnommen wird. Details zu dem mit einer Kappe verschlossenen Behälter sind beispielsweise in der WO 96/06011 beschrieben. Der Behälter dient zur Aufnahme einer flüssigen pharmazeutischen Formulierung und wird als Kartusche in treibmittelfreien Inhalatoren verwendet. Bei den flüssigen Formulierungen handelt es sich bevorzugt um Lösungen mit Wasser als hauptsächlichem Bestandteil des Lösungsmittels.

Ferner ist der Behälter zur Verwendung in dem oben geschilderten Verfahren ein geschlossener und mit einem Flansch versehener kolabierbarer Sack. Zweckmäßigerweise besteht der Sack aus einer Metallfolie, wie z.B. einer Aluminiumfolie und/oder einer Kunststofffolie oder einer mit einem Kunststoff beschichteten Metallfolie. Bevorzugt ist der Sack in einer Metall- oder Kunststoffhülse eingebettet. Ein solcher Behälter dient als Kartusche für treibmittelfreie Vernebler und ist in der WO 99/43571 offenbart.

Als Arzneimittelformulierungen für die Behälter, die über das erfindungsgemäße Verfahren getestet werden können, kommen prinzipiell jede Art von Formulierungen in Frage. Bevorzugt werden Behälter mit Arzneimitteln für die inhalative Applikation getestet.

Besonders bevorzugt sind in diesem Zusammenhang Arzneimittel, die ausgewählt sind aus der Gruppe bestehend aus Anticholinergika, Antihistaminika, Betamimetika, Steroiden, Phosphodiesterase IV-inhibitoren, LTD4-Antagonisten und EGFR-Kinase-Hemmer, Antiallergika, Derivate von Mutterkornalkaloiden, Triptane, CGRP-Antagonisten, Phosphodiesterase-V-Inhibitoren, sowie Kombinationen aus solchen Wirkstoffen, z.B. Betamimetika plus Anticholinergika oder Betamimetica plus Antiallergika. Im Fall von Kombinationen weist wenigstens einer der Wirkstoffe vorzugsweise chemisch gebundenes Wasser auf. Bevorzugt werden Anticholinergika-haltige Wirkstoffe eingesetzt, als Monopräparate oder in Form von Kombinationspräparaten.

Im Einzelnen seien als Beispiele für die wirksamen Bestandteile oder deren Salze genannt:

Zur Anwendung gelangende Anticholinergika sind bevorzugt ausgewählt aus der Gruppe bestehend aus Tiotropiumbromid, Oxitropiumbromid, Flutropiumbromid, Ipratropiumbromid, Glycopyrroniumsalze, Trospiumchlorid, Tolterodin, 2,2-Diphenylpropionsäuretropenolestermethobromid, 2,2-Diphenylpropionsäurescopinester-methobromid, 2-Fluor-2,2-Diphenyl-essigsäurescopinester-methobromid, 2-Fluor-2,2-Diphenylessigsäuretropenolester-methobromid, 3,3',4,4'-Tetrafluorbenzilsäuretropenolester-Methobromid, 3,3',4,4'-Tetrafluorbenzilsäurescopinester-Methobromid, 4,4'-Difluorbenzilsäuretropenolester-Methobromid, 4,4'-Difluorbenzilsäurescopinester-Methobromid, 3,3'-Difluorbenzilsäuretropenolester-Methobromid, 3,3'-Difluorbenzilsäurescopinester-Methobromid, 9-Hydroxy-fluoren-9-carbonsäuretropenolester -Methobromid, 9-Fluor-fluoren-9-carbonsäuretropenolester -Methobromid, 9-Hydroxy-fluoren-9-carbonsäurescopinester -Methobromid, 9-Fluor-fluoren-9-carbonsäurescopinester Methobromid, 9-Methyl-fluoren-9-carbonsäuretropenolester Methobromid, 9-Methyl-fluoren-9-carbonsäurescopinester Methobromid, Benzilsäurecyclopropyltropinester-Methobromid, 2,2-Diphenylpropionsäurecyclopropyltropinester -Methobromid, 9-Hydroxy-xanthen-9-carbonsäurecyclopropyltropinester-Methobromid, 9-Methyl-fluoren-9-carbonsäurecyclopropyltropinester-Methobromid, 9-Methyl-xanthen-9-carbonsäurecyclopropyltropinester-Methobromid, 9-Hydroxy-fluoren-9-carbonsäurecyclopropyltropinester-Methobromid, 4,4'-Difluorbenzilsäuremethylestercyclopropyltropinester -Methobromid, 9-Hydroxy-xanthen-9-carbonsäuretropenolester -Methobromid, 9-Hydroxy-xanthen-9-carbonsäurescopinester Methobromid, 9-Methyl-xanthen-9-carbonsäuretropenolester -Methobromid, 9-Methyl-xanthen-9-carbonsäurescopinester -Methobromid, 9-Ethyl-xanthen-9-carbonsäuretropenolester Methobromid, 9-Difluormethyl-xanthen-9-carbonsäuretropenolester -Methobromid und 9-Hydroxymethyl-xanthen-9-carbonsäurescopinester -Methobromid, gegebenenfalls in Form ihrer Racemate, Enantiomere oder Diastereomere und gegebenenfalls in Form ihrer Solvate und/oder Hydrate.

Zur Anwendung gelangende Betamimetika sind bevorzugt ausgewählt aus der Gruppe bestehend aus Albuterol, Bambuterol, Bitolterol, Broxaterol, Carbuterol, Clenbuterol, Fenoterol, Formoterol, Hexoprenaline, Ibuterol, Indacaterol, Isoetharine, Isoprenaline, Levosalbutamol, Mabuterol, Meluadrine, Metaproterenol, Orciprenaline, Pirbuterol, Procaterol, Reproterol, Rimiterol, Ritodrine, Salmeterol, Salmefamol, Soterenot, Sulphonterol, Tiaramide, Terbutaline, Tolubuterol, CHF-1035, HOKU-81, KUL-1248, 3-(4-{6-[2-Hydroxy-2-(4-hydroxy-3-hydroxymethyl-phenyl)-ethylamino]-hexyloxy}-butyl)-benzolsulfonamid, 5-[2-(5,6-Diethyl-indan-2-ylamino)-1-hydroxy-ethyl]-8-hydroxy-1*H-*quinolin-2-on, 4-hydroxy-7-[2-{[2-{[3-(2-phenylethoxy)propyl]sulphonyl}ethyl]-amino}ethyl]-2(3H)-benzothiazolon, 1-(2-Fluoro-4-hydroxyphenyl)-2-[4-(1-benzimidazolyl)-2-methyl-2-butylamino]ethanol, 1-[3-(4-methoxybenzyl-amino)-4-hydroxyphenyl]-2-[4-(1-benzimidazolyl)-2-methyl-2-butylamino]ethanol, 1-[2H-5-hydroxy-3-oxo-4H-1,4-benzoxazin-8-yl]-2-[3-(4-N,N-dimethylaminophenyl)-2-methyl-2-propylamino]ethanol, 1-[2H-5-hydroxy-3-oxo-4H-1,4-benzoxazin-8-yl]-2-[3-(4-methoxyphenyl)-2-methyl-2-propylamino]ethanol, 1-[2H-5-hydroxy-3-oxo-4H-1,4-benzoxazin-8-yl]-2-[3-(4-n-butyloxyphenyl)-2-methyl-2-propylamino]ethanol, 1-[2H-5-hydroxy-3-oxo-4H-1,4-benzoxazin-8-yl]-2-{4-[3-(4-methoxyphenyl)-1,2,4-triazol-3-yl]-2-methyl-2-butylamino}ethanol, 5-hydroxy-8-(1-hydroxy-2-isopropylaminobutyl)-2H-1,4-benzoxazin-3-(4H)-on, 1-(4-amino-3-chloro-5-trifluormethylphenyl)-2-tert.-butylamino)ethanol und 1-(4-ethoxycarbonylamino-3-cyano-5-fluorophenyl)-2-(tert.-butylamino)ethanol, gegebenenfalls in Form ihrer Racemate, Enantiomere oder Diastereomere und gegebenenfalls in Form ihrer pharmakologisch verträglichen Säureadditionssalze, Solvate und/oder Hydrate.

Zur Anwendung gelangende Steroide sind bevorzugt ausgewählt aus der Gruppe bestehend aus Prednisolon, Prednison, Butixocortpropionat, RPR-106541, Flunisolid, Beclomethason, Triamcinolon, Budesonid, Fluticason, Mometason, Ciclesonid, Rofleponid, ST-126, Dexamethason, 6α,9α-Difluoro-17α-[(2-furanylcarbonyl)oxy]-11β-hydroxy-16α-methyl-3-oxo-androsta-1,4-dien-17β-carbothionsäure (S)-fluoromethylester, 6α,9α-Difluoro-11β-hydroxy-16α-methyl-3-oxo-17α-propionyloxy-androsta-1,4-dien-17β-carbothionsäure (S)-(2-oxo-tetrahydro-furan-3S-yl)ester und Etiprednol-dichloroacetat (BNP-166), gegebenenfalls in Form ihrer Racemate, Enantiomere oder Diastereomere und gegebenenfalls in Form ihrer Salze und Derivate, ihrer Solvate und/oder Hydrate.

Zur Anwendung gelangende PDE IV-Inhibitoren sind bevorzugt ausgewählt aus der Gruppe bestehend aus Enprofyllin, Theophyllin, Roflumilast, Ariflo (Cilomilast), CP-325,366, BY343, D-4396 (Sch-351591), AWD-12-281 (GW-842470), N-(3,5-Dichloro-1-oxo-pyridin-4-yl)-4-difluoromethoxy-3-cyclopropylmethoxy-benzamid, NCS-613, Pumafentine, (-)p-[(4*a*R*,10*b*S*)-9-Ethoxy-1,2,3,4,4a,10b-hexahydro-8-methoxy-2-methylbenzo[s][1,6]naph-thyridin-6-yl]-N,N-diisopropylbenzamid, (R)-(+)-1-(4-Bromobenzyl)-4-[(3-cyclopentyloxy)-4-methoxyphenyl]-2-pyrrolidon, 3-(Cyclopentyloxy-4-methoxyphenyl)-1-(4-N'-[N-2-cyano-S-methyl-isothioureido]benzyl)-2-pyrrolidon, cis[4-Cyano-4-(3-cyclopentyloxy-4-methoxyphenyl)cyclohexan-1-carbonsäure], 2-carbomethoxy-4-cyano-4-(3-cyclopropylmethoxy-4-difluoromethoxyphenyl)cyclohexan-1-on, cis[4-Cyano-4-(3-cyclopropylmethoxy-4-difluoromethoxyphenyl)cyclohexan-1-ol], (R)-(+)-Ethyl[4-(3-cyclopentyloxy-4-methoxyphenyl)pyrrolidin-2-yliden]acetat, (S)-(-)-Ethyl[4-(3-cyclopentyloxy-4-methoxyphenyl)pyrrolidin-2-yliden]acetat, CDP840, Bay-198004, D-4418, PD-168787, T-440, T-2585, Arofyllin, Atizoram, V-11294A, Cl-1018, CDC-801, CDC-3052, D-22888, YM-58997, Z-15370, 9-Cyclopentyl-5,6-dihydro-7-ethyl-3-(2-thienyl)-9*H-*pyrazolo[3,4-c]-1,2,4-triazolo[4,3-a]pyridin und 9-Cyclopentyl-5,6-dihydro-7-ethyl-3-(*tert-*butyl)-9*H*-pyrazolo[3,4-c]-1,2,4-triazolo[4,3-a]pyridin, gegebenenfalls in Form ihrer Racemate, Enantiomere oder Diastereomere und gegebenenfalls in Form ihrer pharmakologisch verträglichen Säureadditionssalze, Solvate und/oder Hydrate.

Zur Anwendung gelangende LTD4-Antagonisten sind bevorzugt ausgewählt aus der Gruppe bestehend aus Montelukast, 1-(((R)-(3-(2-(6,7-Difluoro-2-quinolinyl)ethenyl)phenyl)-3-(2-(2-hydroxy-2-propyl)phenyl)thio)methylcyclopropan-essigsäure, 1-(((1(R)-3(3-(2-(2,3-Dichlorothieno[3,2-b]pyridin-5-yI)-(E)-ethenyl)phenyl)-3-(2-(1-hydroxy-1-methylethyl)phenyl)propyl)thio)methyl)cyclopropanessigsäure, Pranlukast, Zafirlukast, [2-[[2-(4-tert-Butyl-2-thiazolyl)-5-benzofuranyl]oxymethyl]phenyl]essigsäure, MCC-847 (ZD-3523), MN-001, MEN-91507 (LM-1507), VUF-5078, VUF-K-8707 und L-733321, gegebenenfalls in Form ihrer Racemate, Enantiomere oder Diastereomere, gegebenenfalls in Form ihrer pharmakologisch verträglichen Säureadditionssalze sowie gegebenenfalls in Form ihrer Salze und Derivate, ihrer Solvate und/oder Hydrate.

Zur Anwendung gelangende EGFR-Kinase-Hemmer sind bevorzugt ausgewählt aus der Gruppe bestehend aus Cetuximab, Trastuzumab, ABX-EGF, Mab ICR-62, 4-[(3-Chlor-4-fluorphenyl)amino]-6-{[4-(morpholin-4-yl)-1-oxo-2-buten-1-yl]amino}-7-cyclopropylmethoxy-chinazolin, 4-[(R)-(1-Phenyl-ethyl)amino]-6-{[4-(morpholin-4-yl)-1-oxo-2-buten-1-yl]amino}-7-cyclopentyloxy-chinazolin, 4-[(3-Chlor-4-fluor-phenyl)amino]-6-{[4-((R)-6-methyl-2-oxo-morpholin-4-yl)-1-oxo-2-buten-1-yl]amino}-7-[(S)-(tetrahydrofuran-3-yl)oxy]-chinazolin, 4-[(3-Chlor-4-fluor-phenyl)amino]-6-[2-((S)-6-methyl-2-oxo-morpholin-4-yl)-ethoxy]-7-methoxy-chinazolin; 4-[(3-Chlor-4-fluorphenyl)amino]-6-({4-[N-(2-methoxy-ethyl)-N-methyl-amino]-1-oxo-2-buten-1-yl}amino)-7-cyclopropylmethoxy-chinazolin, 4-[(R)-(1-Phenyl-ethyl)amino]-6-({4-[N-(tetrahydropyran-4-yl)-N-methyl-amino]-1-oxo-2-buten-1-yl}amino)-7-cyclopropylmethoxy-chinazolin, 4-[(3-Chlor-4-fluorphenyl)amino]-6-({4-[N-(2-methoxy-ethyl)-N-methyl-amino]-1-oxo-2-buten-1-yl}amino)-7-cyclopentyloxy-chinazolin, 4-[(3-Chlor-4-fluorphenyl)amino]-6-{[4-(N,N-dimethylamino)-1-oxo-2-buten-1-yl]amino}-7-[(R)-(tetrahydrofuran-2-yl)methoxy]-chinazolin, 4-[(3-Ethinyl-phenyl)amino]-6,7-bis-(2-methoxy-ethoxy)-chinazolin, 4-[(R)-(1-Phenyl-ethyl)amino]-6-(4-hydroxy-phenyl)-7H-pyrrolo[2,3-d]pyrimidin, 3-Cyano-4-[(3-chlor-4-fluorphenyl)amino]-6-{[4-(N,N-dimethylamino)-1-oxo-2-buten-1-yl]amino}-7-ethoxy-chinolin, 4-[(R)-(1-Phenyl-ethyl)amino]-6-{[4-((R)-6-methyl-2-oxo-morpholin-4-yl)-1-oxo-2-buten-1-yl]amino}-7-methoxy-chinazolin, 4-[(3-Chlor-4-fluorphenyl)amino]-6-{[4-(morpholin-4-yl)-1-oxo-2-buten-1-yl]amino}-7-[(tetrahydrofuran-2-yl)methoxy]-chinazolin, 4-[(3-Ethinyl-phenyl)amino]-6-{[4-(5,5-dimethyl-2-oxo-morpholin-4-yl)-1-oxo-2-buten-1-yl]amino}-chinazolin, 4-[(3-Chlor-4-fluor-phenyl)amino]-6-{2-[4-(2-oxo-morpholin-4-yl)-piperidin-1-yl]-ethoxy}-7-methoxy-chinazolin, 4-[(3-Chlor-4-fluor-phenyl)amino]-6-(trans-4-amino-cyclohexan-1-yloxy)-7-methoxy-chinazolin, 4-[(3-Chlor-4-fluor-phenyl)amino]-6-(trans-4-methansulfonylamino-cyclohexan-1-yloxy)-7-methoxy-chinazolin, 4-[(3-Chlor-4-fluor-phenyl)amino]-6-(tetrahydropyran-3-yloxy)-7-methoxy-chinazolin, 4-[(3-Chlor-4-fluorphenyl)amino]-6-{1-[(morpholin-4-yl)carbonyl]-piperidin-4-yloxy}-7-methoxy-chinazolin, 4-[(3-Chlor-4-fluor-phenyl)amino]-6-(piperidin-3-yloxy)-7-methoxy-chinazolin, 4-[(3-Chlor-4-fluor-phenyl)amino]-6-[1-(2-acetylamino-ethyl)-piperidin-4-yloxy]-7-methoxy-chinazolin, 4-[(3-Chlor-4-fluor-phenyl)amino]-6-(tetrahydropyran-4-yloxy)-7-ethoxy-chinazolin, 4-[(3-Chlor-4-fluor-phenyl)amino]-6-{trans-4-[(morpholin-4-yl)carbonylamino]-cyclohexan-1-yloxy}-7-methoxy-chinazolin, 4-[(3-Chlor-4-fluor-phenyl)amino]-6-{1-[(piperidin-1-yl)carbonyl]-piperidin-4-yloxy}-7-methoxy-chinazolin, 4-[(3-Chlor-4-fluor-phenyl)amino]-6-(cis-4-{N-[(morpholin-4-yl)carbonyl]-N-methyl-amino}-cyclohexan-1-yloxy)-7-methoxy-chinazolin, 4-[(3-Chlor-4-fluor-phenyl)amino]-6-(trans-4-ethansulfonylamino-cyclohexan-1-yloxy)-7-methoxy-chinazolin, 4-[(3-Chlor-4-fluor-phenyl)amino]-6-(1-methansulfonyl-piperidin-4-yloxy)-7-(2-methoxy-ethoxy)-chinazolin, 4-[(3-Chlor-4-fluor-phenyl)amino]-6-[1-(2-methoxy-acetyl)-piperidin-4-yloxy]-7-(2-methoxy-ethoxy)-chinazolin, 4-[(3-Ethinyl-phenyl)amino]-6-(tetrahydropyran-4-yloxy]-7-methoxy-chinazolin, 4-[(3-Chlor-4-fluor-phenyl)amino]-6-(cis-4-{N-[(piperidin-1-yl)carbonyl]-N-methyl-amino}-cyclohexan-1-yloxy)-7-methoxy-chinazolin, 4-[(3-chlor-4-fluor-phenyl)amino]-6-{cis-4-[(morpholin-4-yl)carbonylamino]-cyclohexan-1-yloxy}-7-methoxy-chinazolin, 4-[(3-Chlor-4-fluor-phenyl)amino]-6-{1-[2-(2-oxopyrrolidin-1-yl)ethyl]-piperidin-4-yloxy}-7-methoxy-chinazolin, 4-[(3-ethinyl-phenyl)amino]-6-(1-acetyl-piperidin-4-yloxy)-7-methoxy-chinazolin, 4-[(3-Ethinyl-phenyl)amino]-6-(1-methyl-piperidin-4-yloxy)-7-methoxy-chinazolin, 4-[(3-Ethinyl-phenyl)amino]-6-(1-methansulfonyl-piperidin-4-yloxy)-7-methoxy-chinazolin, 4-[(3-Chlor-4-fluor-phenyl)amino]-6-(1-methyl-piperidin-4-yloxy)-7(2-methoxy-ethoxy)-chinazolin, 4-[(3-Ethinyl-phenyl)amino]-6-{1-[(morpholin-4-yl)carbonyl]-piperidin-4-yloxy}-7-methoxy-chinazolin, 4-[(3-Chlor-4-fluor-phenyl)amino]-6-{1-[(N-methyl-N-2-methoxyethyl-amino)carbonyl]-piperidin-4-yloxy}-7-methoxy-chinazolin, 4-[(3-Chlor-4-fluor-phenyl)amino]-6-(1-ethyl-piperidin-4-yloxy)-7-methoxy-chinazolin, 4-[(3-Chlor-4-fluor-phenyl)amino]-6-[cis-4-(N-methansulfonyl-N-methyl-amino)-cyclohexan-1-yloxy]-7-methoxy-chinazolin, 4-[(3-Chlor-4-fluor-phenyl)amino]-6-[cis-4-(N-acetyl-N-methyl-amino)-cyclohexan-1-yloxy]-7-methoxy-chinazolin, 4-[(3-Chlor-4-fluor-phenyl)amino]-6-(trans-4-methylamino-cyclohexan-1-yloxy)-7-methoxy-chinazolin, 4-[(3-Chlor-4-fluor-phenyl)amino]-6-[frans-4-(N-methansulfonyl-N-methyl-amino)-cyclohexan-1-yloxy]-7-methoxy-chinazolin, 4-[(3-Chlor-4-fluor-phenyl)amino]-6-(trans-4-dimethylamino-cyclohexen-1-yloxy)-7-methoxy-chinazolin, 4-[(3-Chlor-4-fluor-phenyl)amino]-6-(trans-4-{N-[(morpholin-4-yl)carbonyl]-N-methyl-amino}-cyclohexan-1-yloxy)-7-methoxy-chinazolin, 4-[(3-Chlor-4-fluor-phenyl)amino]-6-[2-(2,2-dimethyl-6-oxo-morpholin-4-yl)-ethoxy]-7-[(S)-(tetrahydrofuran-2-yl)methoxy]-chinazolin, 4-[(3-Chlor-4-fluorphenyl)amino]-6-(1-methansulfonyl-piperidin-4-yloxy)-7-methoxy-chinazolin, 4-[(3-Chlor-4-fluor-phenyl)amino]-6-(1-cyano-piperidin-4-yloxy)-7-methoxy-chinazolin, und 4-[(3-Chlor-4-fluor-phenyl)amino]-6-{1-[(2-methoxyethyl)carbonyl]-piperidin-4-yloxy}-7-methoxy-chinazolin, gegebenenfalls in Form ihrer Racemate, Enantiomere oder Diastereomere, gegebenenfalls in Form ihrer pharmakologisch verträglichen Säureadditionssalze, ihrer Solvate und/oder Hydrate.

Unter Säureadditionssalzen mit pharmakologisch verträglichen Säuren zu deren Bildung die Verbindungen gegebenenfalls in der Lage sind, werden beispielsweise Salze ausgewählt aus der Gruppe bestehend aus Hydrochlorid, Hydrobromid, Hydroiodid, Hydrosulfat, Hydrophosphat, Hydromethansulfonat, Hydronitrat, Hydromaleat, Hydroacetat, Hydrobenzoat, Hydrocitrat, Hydrofumarat, Hydrotartrat, Hydrooxalat, Hydrosuccinat, Hydrobenzoat und Hydro-p-toluolsulfonat, bevorzugt Hydrochlorid, Hydrobromid, Hydrosulfat, Hydrophosphat, Hydrofumarat und Hydromethansulfonat verstanden.

Als Antiallergika: Dinatriumcromoglicat, Nedocromil.

Als Derivate der Mutterkornalkaloide: Dihydroergotamin, Ergotamin.

Für die Inhalation kommen Arzneimittel, Arzneimittelformulierungen und -mischungen mit den o.g. Wirkstoffen in Betracht, sowie deren Salze, Additionsprodukte und Ester sowie die Kombination dieser Wirkstoffe, Salze, Additionspodukte und Ester.

Das erfindungsgemäße Verfahren wird bevorzugt für Behälter für die genannten Wirkstoffe oder Kombinationen verwendet, ist jedoch nicht auf die genanten Wirkstoffe beschränkt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

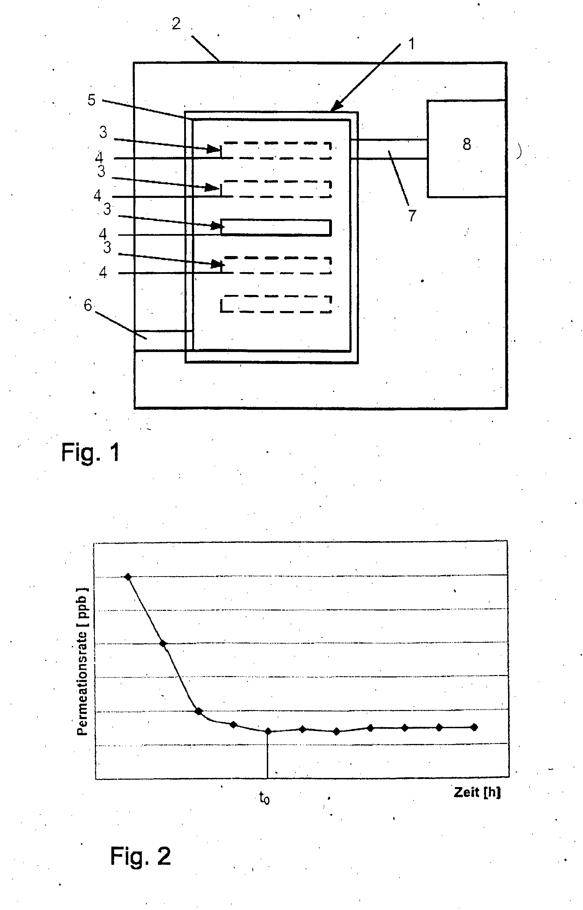

- Fig. 1: eine schematische Darstellung eines Aufbaus zur Durchführung des erfindungsgemäßen Verfahrens,
- Fig. 2: ein Diagramm zur Darstellung der Permeabilitätsrate über der Zeit während des Verfahrens,

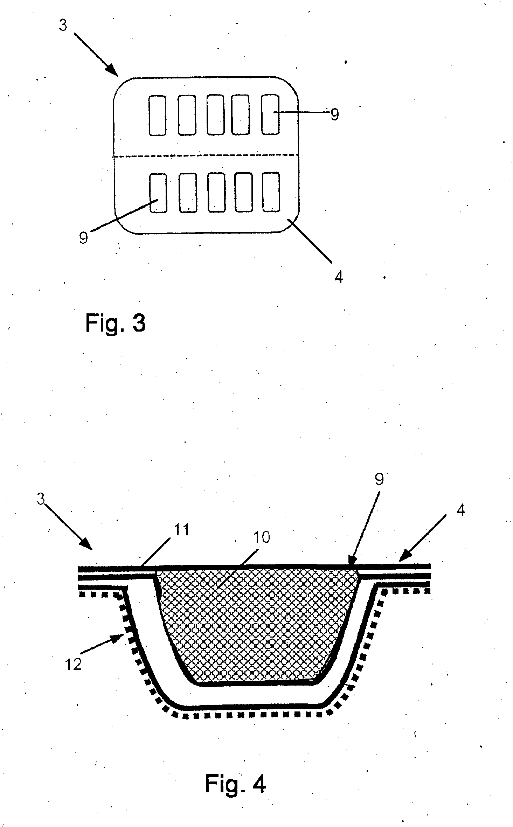

- Fig. 3: eine schematische Draufsicht auf einen als Blister ausgebildeten Behälter zur Verwendung in dem Verfahren,
- Fig. 4: einen Teilschnitt durch den Blister nach Fig. 3,

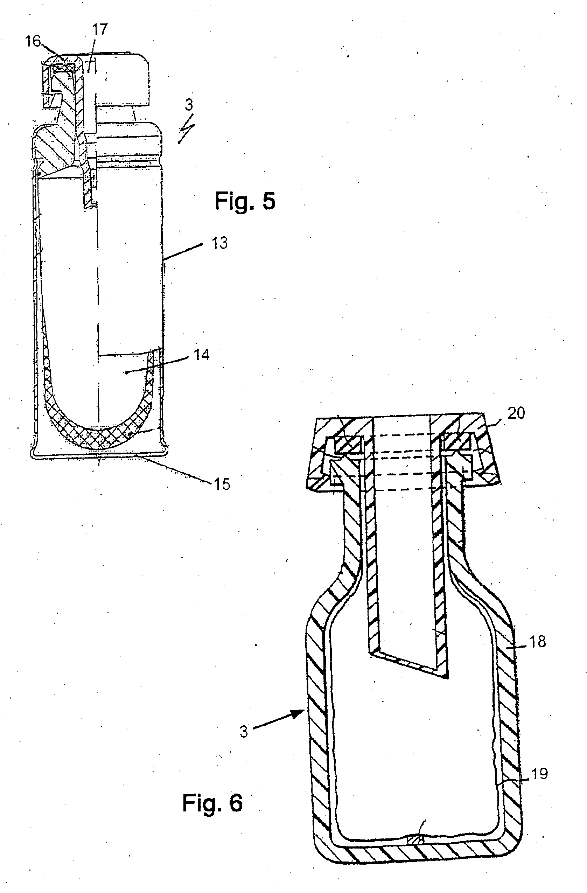

- Fig. 5: einen flaschenähnlichen Behälter zur Verwendung in dem Verfahren und
- Fig. 6: einen als kolabierbaren Sack ausgebildeten Behälter zur Verwendung in dem Verfahren.

Zur Durchführung des Verfahrens wird eine geschlossene Probenkammer 1 mit vorgetrockneten Dichtungen in eine ebenfalls geschlossene Kammer 2 eingesetzt. In der Probenkammer 1 befinden sich ein oder mehrere Behälter 3, die vorliegend als Blister 4 ausgebildet sind, deren Permeabilitätsverhalten zu überprüfen ist. Zur Beschleunigung des Verfahrens werden die Blister 4 vor dem Einsetzen in die Probenkammer 1 vorgetrocknet. Zur Erzeugung einer konstanten Temperatur wird die Probenkammer 1 klimatisiert, indem durch ihren äußeren Doppelmantel 5 ein Heiz-/Kühlmedium mit konstanter Temperatur geleitet wird. Die Probenkammer 1 weist einen Einlass 6 und einen Auslass 7 für ein vorgetrocknetes Gas auf, wobei der Auslass 7 mit einer Schwingquarze umfassenden Auswerteeinheit 8 zur Analyse des Gases gekoppelt ist. In Näpfe 9 der Blister 4 zur Aufnahme einer pharmazeutischen Wirkstoffformulierung werden Festkörper 10 aus Ton eingesetzt, die mit Wasser getränkt sind und den Napf 9 vollständig füllen, um dessen mechanische Beschädigung durch die Beaufschlagung des Gases zu vermeiden, wobei als Gas Stickstoff verwendet wird.

Mit dem Verfahren wird die Permeabilitätsrate des Blisters 4 für Wasserdampf am Echtmodell erfasst, wobei dem Verfahren die Überlegung zugrunde liegt, dass bei einem gegebenen Partialdruckgefälle die Richtung der Permeabilität bei den zu untersuchenden Blistern 4 keine Rolle spielt. Es wird also vorausgesetzt, dass die Permeabilität bzw. Permeation von außen nach innen genauso abläuft wie von innen nach außen. Aus dem dicht verschlossenen Blister 4, in dessen Näpfen 9 sich die mit Wasser getränkten Festkörper 10 befinden, tritt Wasserdampf nach außen, da innerhalb der Näpfe 9 eine relative Feuchte von 100% vorliegt, während der Blister 4 von dem getrockneten Stickstoff mit minimaler Restfeuchte umströmt wird. Der Stickstoff nimmt den aus den Näpfen 9 des Blisters 4 austretenden Wasserdampf auf und transportiert ihn zu der Auswerteeinheit 8. Zur Präzisierung reproduzierbarer Messergebnisse werden der Massendurchfluss und der Druck des Stickstoffes sowie die Temperatur der Probenkammer 1 konstant gehalten. Die Schwingquarze der Auswerteeinheit 8 dienen zur Bestimmung der Feuchte in dem Stickstoff und arbeiten in einem Messbereich größer Null ppb. Durch das schnelle Ansprechverhalten der Schwingquarze ist eine quasi-kontinuierliche Messung der Feuchte, also der Zunahme der Menge von Wasser im Stickstoff, möglich. Während des Verfahrens stellt sich nach einer Zeit t₀ ein stationärer Zustand der Wasserdampfkonzentration ein, die die Permeabilität des Wasserdampfes widerspiegelt. Wird von diesem Wert die Restfeuchte des Stickstoffs subtrahiert, erhält man die Permeabilitätsrate für die Anzahl von Näpfen 9 des Blisters 4 innerhalb der Probenkammer 1. Unter der Annahme, dass sämtliche Nämpfe 9 bzw. Blister 4 gleich gut verarbeitet sind, lässt sich aus der Permeabilitätsrate zur Zeit t₀ die Wasserdampfabgabe eines Napfes 9 errechnen, was bei der Entwicklung von Behältern 3, insbesondere Blistern 4, zum Schutz der darin aufgenommenen pharmazeutischen Wirkstoffformulierung von besonderer Bedeutung ist. Gleichermaßen lassen sich anhand der Permeabilitätsrate Blister 4 aus der laufenden Produktion hinsichtlich ihrer Dichtigkeit überprüfen. Aufgrund der Vortrocknung der Blister 4 sowie der Dichtungen der Probenkammer 1 wird der stationäre Zustand der Permeabilitätsrate relativ früh erreicht, wodurch das Verfahren verhältnismäßig schnell durchführbar ist.

Zur Verwendung in dem Verfahren sind Blister 4 mit folgender Schichtenabfolge vorgesehen. Eine Deckfolie 11 ist aus Aluminium gefertigt und weist eine Dicke von 10 bis 80 Mikrometer, bevorzugt von 20 bis 50 Mikrometer, insbesondere von 30 bis 40 Mikrometer auf. Die Deckfolie 11 ist mittels eines Heißsiegellackes mit einer tief gezogenen, die Näpfe 9 aufweisenden Trägerfolie 12 abgedichtet verbunden. Die Trägerfolie 12 besteht auf der Produkt berührenden Seite aus einer PVC-, PP-, PE-Schicht o. Ä. mit einer Dicke zwischen 10 bis 200 Mikrometer, bevorzugt zwischen 15 und 50 Mikrometer, insbesondere zwischen 20 und 40 Mikrometern. Diese Folie ist mit einer Aluminiumfolie verbunden, deren Dicke bevorzugt 30 bis 60 Mikrometer, vorteilhafterweise 35 bis 50 Mikrometer beträgt. An die Aluminiumfolie schließt sich eine Polyamid-Folie an, die eine Dicke zwischen 10 und 40 Mikrometern, bevorzugt 15 bis 30 Mikrometer aufweist. Bei einer alternativen Trägerfolie 12 ist die PCV-Folie auf der dem Produkt zugewandten Seite durch eine Polypropylenfolie oder dergleichen ersetzt.

Bei dem am stärksten bevorzugten Blister 4 besteht die Deckfolie 11 aus einer 38 µm dicken Aluminiumfolie und dem Heißsiegellack. Die Trägerfolie 12 ist auf der dem pharmazeutischen Produkt zugewandten Seite aus einer 30 µm dicken PVC-Folie, einer sich daran anschließenden 45 µm dicken Aluminium-Folie sowie einer außenseitigen 20 µm dicken Polyamidfolie gefertigt.

Ein weiterer Behälter 3 zur Verwendung in dem Verfahren ist als geschlossener zweischichtiger flaschenähnlicher Behälter, als eine Inhalatorkartusche 13 gebildet und besteht aus einem Sack 14 aus einer Metall- und/oder Kunststofffolie, der in eine Hülse 15 aus Metall oder Kunststoff eingesetzt ist. Der Sack 14 umfasst einen fest verschlossenen Flansch 16 mit einem Führungskanal 17 für eine Kanüle. Des Weiteren ist eine Presspassung oder Dichtung vorgesehen, die eine in den Führungskanal 17 eindringende und denselben öffnender Kanüle abdichtet. Die Kanüle kann die eines Inhalators ein, dem eine kleine Menge der Flüssigkeit aus dem Behälter 3 entnommen werden kann. Ein solcher Behälter 3 wird auch in der WO 99/43571 ausführlich beschrieben.

Ein weiterer zur Verwendung in dem Verfahren geeigneter Behälter 3 dient als Kartusche für einen in der WO 91/14468 und WO 97/12687 beschriebenen Inhalator und ist zweischichtig flaschenähnlich mit einer steifen Außenhülle 18 und einem punktuell mit der Außenhülle 18 verbundenen Innenbehälter 19, der gegenüber der Außenhülle in sich zusammenfallen kann, ausgebildet. Der Behälter ist mit einer Kappe 20 verschossen. Solche Behälter sind beispielsweise in der EP 532 873 und der WO 96/06011 ausführlich beschrieben.

## Patentansprüche

1. Verfahren zur Überprüfung der Flüssigkeits-Permeabilitätsrate eines geschlossenen Behälters (3), der zur Aufnahme einer pharmazeutischen Wirkstoffformulierung geeignet ist, wobei der Behälter (3) in eine geschlossene Probenkammer (1) gegeben wird, durch die ein Gas strömt, wobei der Behälter (3) mit dem Gas beaufschlagt wird, und wobei anschließend eine Zunahme der Menge der Flüssigkeit in dem Gas analysiert wird, **dadurch gekennzeichnet, dass** die Flüssigkeit von einem porösen Festkörper (10) aufgenommen wird, der in den Behälter (3) eingelegt wird und der Festkörper (10) an die Größe und Form des Behälters (3) derart angepasst ist, dass der Behälter (3) bei der Beaufschlagung durch Gas vor einer Deformation, sowie vor einer Beschädigung geschützt wird.

2. Verfahren nach Anspruch 1, **dadurch gekennzeichnet, dass** der Festkörper (10) aus Ton gefertigt wird.

3. Verfahren nach Anspruch 1, **dadurch gekennzeichnet, dass** als Flüssigkeit Wasser verwendet wird.

4. Verfahren nach Anspruch 3, **dadurch gekennzeichnet, dass** der Ton mit Wasser getränkt und derart in den Behälter (3) eingebracht wird, dass er den Behälter (3) vollständig füllt.

5. Verfahren nach Anspruch 1, **dadurch gekennzeichnet, dass** als Gas Stickstoff verwendet wird.

6. Verfahren nach einem der Ansprüche 1 bis 5, **dadurch gekennzeichnet, dass** das Gas vor der Beaufschlagung des Behälters (3) getrocknet wird.

7. Verfahren nach Anspruch 6, **dadurch gekennzeichnet, dass** die Probenkammer (1) klimatisiert wird.

8. Verfahren nach Anspruch 7, **dadurch gekennzeichnet, dass** Dichtungen der Probenkammer (1) vorgetrocknet werden.

9. Verfahren nach Anspruch 1, **dadurch gekennzeichnet, dass** das Gas die Probenkammer (1) mit einem konstanten Massendurchfluss und einem konstanten Druck durchströmt.

10. Verfahren nach einem der Ansprüche 1 bis 9, **dadurch gekennzeichnet, dass** der Behälter (3) vor dem Einsetzen in die Probenkammer (1) vorgetrocknet wird.

11. Verfahren nach einem der Ansprüche 1 bis 10, **dadurch gekennzeichnet, dass** die Probenkammer (1) in eine geschlossene Kammer (2) gegeben wird.

12. Verfahren nach Anspruch 1, **dadurch gekennzeichnet, dass** zur Analyse des Gases eine Auswerteeinheit (8) verwendet wird, die Schwingquarze umfasst.

## Claims

1. Method for checking the liquid permeability rate of a closed container (3) which is suitable for receiving a pharmaceutical active constituent formulation, the container (3) being placed in a closed test chamber (1) through which a gas flows, the container (3) being acted upon by the gas, and an increase in the quantity of liquid in the gas is subsequently analysed, **characterised in that** the liquid is absorbed by a porous solid body (10) which is placed in the container (3) and the solid body (10) matches the size and shape of the container (3) such that the container (3) is protected from deformation and from damage while it is being acted upon by gas.

2. Method according to claim 1, **characterised in that** the solid body (10) is made from clay.

3. Method according to claim 1, **characterised in that** water is used as liquid.

4. Method according to claim 3, **characterised in that** the clay is impregnated with water and introduced into the container (3) in such a way as to fill the container (3) completely.

5. Method according to claim 1, **characterised in that** nitrogen is used as gas.

6. Method according to one of claims 1 to 5, **characterised in that** the gas is dried before acting upon the container (3).

7. Method according to claim 6, **characterised in that** the test chamber (1) is climatically controlled.

8. Method according to claim 7, **characterised in that** seals of the test chamber (1) are dried beforehand.

9. Method according to claim 1, **characterised in that** the gas flows through the test chamber (1) at a constant mass flow rate and at a constant pressure.

10. Method according to one of claims 1 to 9, **characterised in that** the container (3) is dried before it is placed in the test chamber (1).

11. Method according to one of claims 1 to 10, **characterised in that** the test chamber (1) is placed in a closed chamber (2).

12. Method according to claim 1, **characterised in that** an evaluation unit (8) that comprises quartz resonators is used for analysing the gas.

## Revendications

1. Procédé pour contrôler le taux de perméabilité au liquide d'un récipient fermé (3) qui est approprié au logement d'une formulation pharmaceutique de principes actifs, le récipient (3) étant mis en place dans une chambre d'échantillon fermée (1), par laquelle un gaz passe, le récipient (3) étant alimenté en gaz, et une augmentation de la quantité de liquide dans le gaz étant ensuite analysée, **caractérisé en ce que** le liquide est reçu par un corps solide (10) poreux qui est introduit dans le récipient (3) et le corps solide (10) est adapté à la grandeur et à la forme du récipient (3) de telle manière que le récipient (3) soit protégé lors de l'alimentation en gaz de toute déformation ainsi que de tout endommagement.

2. Procédé selon la revendication 1, **caractérisé en ce que** le corps solide (10) est fabriqué en argile.

3. Procédé selon la revendication 1, **caractérisé en ce que** de l'eau est utilisée comme liquide.

4. Procédé selon la revendication 3, **caractérisé en ce que** l'argile est imprégnée d'eau et est introduite dans le récipient (3) de telle manière qu'elle remplisse complètement le récipient (3).

5. Procédé selon la revendication 1, **caractérisé en ce que** de l'azote est utilisé comme gaz.

6. Procédé selon l'une quelconque des revendications 1 à 5, **caractérisé en ce que** le gaz est séché avant l'alimentation du récipient (3).

7. Procédé selon la revendication 6, **caractérisé en ce que** la chambre d'échantillon (1) est climatisée.

8. Procédé selon la revendication 7, **caractérisé en ce que** des garnitures de la chambre d'échantillon (1) sont préséchées.

9. Procédé selon la revendication 1, **caractérisé en ce que** le gaz traverse la chambre d'échantillon (1) avec un débit massique constant et une pression constante.

10. Procédé selon l'une quelconque des revendications 1 à 9, **caractérisé en ce que** le récipient (3) est préséché avant l'insertion dans la chambre d'échantillon (1).

11. Procédé selon l'une quelconque des revendications 1 à 10, **caractérisé en ce que** la chambre d'échantillon (1) est mise en place dans une chambre fermée (2).

12. Procédé selon la revendication 1, **caractérisé en ce qu'**une unité d'évaluation (8) est utilisée pour l'analyse du gaz, laquelle comporte du quartz oscillant.
